Europäisches Patentamt

**European Patent Office**

Office européen des brevets

(19)

(11) Veröffentlichungsnummer: **0 122 538**
**B1**

(12) **EUROPÄISCHE PATENTSCHRIFT**

(45) Veröffentlichungstag der Patentschrift:
26.08.87

(51) Int. Cl.⁴: **H 04 N 9/12**, H 04 B 1/26,
H 04 H 1/04

(21) Anmeldenummer: 84103687.4

(22) Anmeldetag: 04.04.84

(54) **Überlagerungsempfänger.**

(30) Priorität: 16.04.83 DE 3313867

(43) Veröffentlichungstag der Anmeldung:
24.10.84 Patentblatt 84/43

(45) Bekanntmachung des Hinweises auf die Patenterteilung:
26.08.87 Patentblatt 87/35

(84) Benannte Vertragsstaaten:
DE FR GB IT NL

(56) Entgegenhaltungen:
DE - A - 2 358 288
DE - A - 2 657 170
DE - A - 2 902 952
DE - B - 1 616 312

FUNKSCHAU, 44.Jahrgang, Heft 14, 2. Juli 1972,
Franzis-Verlag, München; H.SPIELER:
Einseitenband-Rundfunkempfänger mit
ungewöhnlichen Eigenschaften" Seiten 485-488

(73) Patentinhaber: **Alcatel N.V., De Lairessestraat 153,
NL-1075 HK Amsterdam (NL)**

(84) Benannte Vertragsstaaten: **FR GB IT NL**

(73) Patentinhaber: **Deutsche ITT Industries GmbH,
Hans-Bunte-Strasse 19 Postfach 840, D-7800 Freiburg
(DE)**

(84) Benannte Vertragsstaaten: **DE**

(72) Erfinder: **Gassmann, Gerhard G., Thomasäckerweg 5,
D-7300 Esslingen (DE)**

(74) Vertreter: **Graf, Georg Hugo, Dipl.-Ing. et al, c/o
Standard Elektrik Lorenz AG Patent- und Lizenzwesen
Postfach 30 09 29 Kurze Strasse 8,
D-7000 Stuttgart 30 (DE)**

ACTORUM AG

**Beschreibung**

Die Erfindung betrifft einen Überlagerungsempfänger zum Empfang eines amplitudenmodulierten HF-Signals nach dem Oberbegriff des Hauptanspruchs. Ein derartiger Überlagerungsempfänger ist in der Offenlegungsschrift DE-A 2 358 288 beschrieben.

Zum Erzeugen und zum Demodulieren von Einseitenbandsignalen wurde nach einer Filter- und einer Phasenmethode noch eine, auch unter diesem Namen bekannte «dritte Methode» bzw. «Third Method» entwickelt. Diese Methode ist über den ursprünglichen Anwendungsbereich hinaus sehr vielseitig einsetzbar. Mit ihr kann, ganz allgemein, ein beliebiges Frequenzband beliebig in seiner Frequenz verschoben werden, wobei gleichzeitig mit einfachen Mitteln alle Nachbarfrequenzen und Mischprodukte unterdrückt werden. Als Filtermittel sind hierbei ausschliesslich Tiefpässe erforderlich, welche nicht nur unerwünschte Mischprodukte beseitigen, sondern auch Störungen unterdrücken, die ihre Ursache in Frequenzen ausserhalb des ursprünglichen Frequenzbands haben. Der Hauptnachteil dieser Methode hat seine Ursache darin, dass das zu verschiebende Frequenzband gleichzeitig zwei Zweige durchläuft, die untereinander exakt gleich sein sollen, jedoch in der Praxis nicht exakt gleich sind.

Das Frequenzband wird bei seiner Verarbeitung in sich gespiegelt, die gespiegelten Anteile verschwinden jedoch wieder, wenn die beiden Zweige exakt gleich sind. Bei ungleichen Zweigen verbleiben störende Anteile, die jedoch nicht aus einem fremden Frequenzband, sondern aus dem zu verarbeitenden Frequenzband selbst stammen. Bei einem Sprach- oder Musiksignal beispielsweise führt etwa ein tiefer Ton zum Auftreten eins stark gedämpften hohen Tons, dessen Amplitude mit der des tiefen Tons korreliert. Ist darüberhinaus noch etwa ein Pilotsignal oder ein Hilfsträger vorhanden, dessen Amplitude nicht von der des Sprach- oder Musiksignals abhängt oder gar bei dessen Verschwinden noch ansteigt, so tritt das «Spiegelbild» dieses Pilotsignals oder Hilfsträgers meist störend in Erscheinung.

Die Demodulation eines Einseitenbandsignals ist nichts anderes als eine Frequenzverschiebung aus dem HF-Bereich in ein Basisband. Die Erzeugung eines Einseitenbandsignals ist nichts anderes als eine Frequenzverschiebung eines Basisbandsignals in den HF-Bereich. Gegebenenfalls ist noch eine frequenzmässige Umkehr des gesamten Frequenzbands erforderlich, was jedoch mathematisch einer Verschiebung in den negativen Frequenzbereich entspricht, so dass technisch ausser der Wahl anderer Oszillatorfrequenzen hierfür keine zusätzlichen Massnahmen zu ergreifen sind. Auch die Demodulation eines restseitenbandmodulierten Fernsehsignals ist nichts anderes als dessen frequenzmässige Verschiebung in das Basisband, so dass der ursprüngliche Bildträger auf die Frequenz Null fällt. Erfolgt die Demodulation des Fernsehsignals nach der dritten Methode, so fällt das Spiegelbild des Bildträgers in das Videosignal und führt damit zu einer Störung (Moiré) im Bild. Bei einem Farbfernsehempfänger ergeben sich zusätzlich Farbstörungen, weil sich die Spiegelbilder von Bildträger und Farbträger gegenseitig beeinflussen.

In der Offenlegungsschrift DE-A 2 902 952, insbesondere in den Fig. 7, 8, 10 bis 13 mit zugehöriger Beschreibung, sind direktmischende Empfangssysteme mit Quadraturmischung im HF-Mischungsteil und mit Synchrongleichrichtung der beiden heruntergemischten und tiefpassgefilterten Signale mit anschliessender Addition oder Subtraktion beschrieben, die auch zum Empfang von Fernsehsignalen geeignet sind.

Der in der Offenlegungsschrift DE-A 2 358 288 beschriebene Überlagerungsempfänger setzt nach der dritten Methode ein frequenzmoduliertes Rundfunk- oder Fernseh-HF-Signal, aber auch ein einseitenbandamplitudenmoduliertes Rundfunk-HF-Signal in die NF-Bandlage um, wobei die Frequenz der beiden gegeneinander um 90° in der Phase gedrehten HF-Oszillatorsignale für die Überlagerung im Quadraturmischer auf die Mitte des HF-Signalspektrums eingestellt wird. Die Unterdrückung der ebenfalls in der Frequenz heruntergemischten Nachbarkanäle erfolgt durch die Sperrflanken der beiden gleichartigen Tiefpässe, die den beiden HF-Mischern nachgeschaltet sind und deren Durchlassbereich etwa bei der halben Bandbreite des HF-Signals liegt. Ferner dienen zwei Doppelweggleichrichter oder Synchrongleichrichter der Demodulation der gegebenenfalls verstärkten Ausgangssignale der beiden Tiefpässe. Schliesslich werden die Ausgangssignale der Doppelweggleichrichter oder der Synchrongleichrichter in einem Addierer addiert oder in einem Subtrahierer subtrahiert.

Der in den Ansprüchen angegebenen Erfindung liegt die Aufgabe zugrunde, den eigentlich zum Empfang von frequenzmodulierten Rundfunk- oder Fernsehsignalen vorgesehenen Überlagerungsempfänger nach der DE-A 2 358 288 für den Empfang von amplitudenmodulierten Fernsehsignalen in einem Farbfernsehempfänger anwendbar zu machen.

Die Erfindung wird anhand eines Ausführungsbeispiels und der Figuren der Zeichnung näher erläutert.

Fig. 1 zeigt das Blockschaltbild eines erfindungsgemässen Fernsehempfangsgeräts.

Fig. 2 zeigt das Spektrum eines Fernsehkanals. Die Frequenzen sind nicht absolut, sondern relativ zur Bildträgerfrequenz angegeben.

Fig. 3 zeigt das Spektrum des Fernsehkanals nach der Mischung in den HF-Mischern.

Fig. 4 zeigt beispielhaft das Schaltbild eines Synchrondemodulators.

Fig. 5 deutet den Aufbau eines integrierbaren Tiefpasses für ein erfindungsgemässes Fernsehempfangsgerät an.

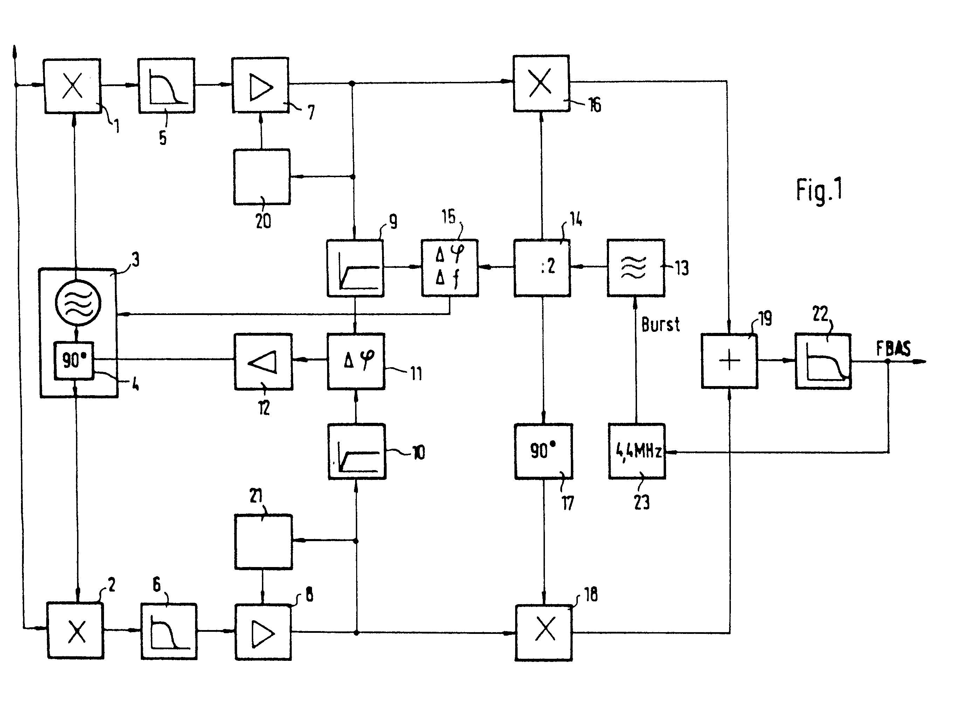

Fig. 1 zeigt zunächst zwei HF-Mischer 1 und 2, denen das Fernsehempfangssignal zugeführt wird. Eine HF-Vorselektion erfolgt im gezeigten Beispiel nicht. Sie ist jedoch dann zwingend erforderlich, wenn die Fernsehempfangssignale in den Mischern 1 und 2 mit nicht sinusförmigen Spannungen gemischt werden. In einem solchen Fall müssen mindestens solche Frequenzen in einer HF-Vorselektion weggefiltert werden, die einem Vielfachen der gewünschten Empfangsfrequenz entsprechen. Ein Ausgangssignal eines HF-Oszillators 3 wird einerseits direkt dem einen HF-Mischer 1 und andererseits über ein 90°-Phasendrehglied 4, das hier als Bestandteil des HF-Oszillators 3 angesehen wird, dem zweiten HF-Mischer 2 zugeführt. Nicht dargestellt sind Abstimmittel, mit denen in bekannter Weise der HF-Oszillator 3 zur Auswahl des gewünschten Fernsehkanals abstimmbar ist. Die Sollfrequenz des HF-Oszillators 3 liegt exakt in der Mitte zwischen der Bildträgerfrequenz und der Farbträgerfrequenz des zu empfangenden Fernsehkanals. Den HF-Mischern 1 und 2 folgt je ein Tiefpass 5 bzw. 6 mit nachfolgenden regelbaren Verstärkern 7 bzw. 8. Zwei Synchrondemodulatoren 16 und 18 sind vorhanden, um die Ausgangssignale der Verstärker 7 bzw. 8 zu demodulieren. Die Ausgangssignale der Synchrondemodulatoren 16 und 18 werden einer Addierstufe 19 zugeführt, dort addiert und einem Videotiefpass 22 mit einer Bandbreite von etwa 5 bis 6 MHz zugeführt. An seinem Ausgang liegt das gewünschte Videosignal (FBAS) an.

Zur Bildung der Trägerfrequenzen für die Mischung in den Multiplizierern 16 und 18 sind ein Farbhilfsträgeroszillator 13, ein Frequenzteiler 14 mit dem Teilerverhältnis 1:2 und ein 90°-Phasendrehglied 17 vorhanden. Die Sollfrequenz des Farbhilfsträgeroszillators 13 ist die Farbträgerfrequenz, etwa 4,433 MHz. Der Farbhilfsträgeroszillator wird in bekannter Weise mit dem «Burst» des Videosignals synchronisiert. Sein Ausgangssignal wird dem Frequenzteiler 14 zugeführt und von dort einmal direkt an den einen Synchrondemodulator 16 und einmal über das 90°-Phasendrehglied 17 dem anderen Synchrondemodulator 18 zugeführt.

Das 90°-Phasendrehglied 4 für die Oszillatorfrequenz sollte in einem sehr grossen Frequenzbereich, der sich nahezu mit dem Empfangsfrequenzbereich deckt, eine Phasendrehung von möglichst genau 90° erzeugen. Es kann aber dann relativ schmalbandig sein, wenn es bei der jeweiligen Arbeitsfrequenz abstimmbar ist. Ein derartiges abstimmbares Phasendrehglied 4 kommt zusammen mit zwei Begrenzern 9 und 10, einer Phasenvergleichsschaltung 11 und einem Regelverstärker 12 zum Einsatz. In den Begrenzern 9 und 10 werden die Ausgangssignale der Verstärker 7 bzw. 8 von ihrer Modulation befreit, es bleiben die in den HF-Mischern 1 und 2 entstandenen ZF-Bildträger übrig, die gegeneinander um 90° phasenverschoben sein sollten. Dies wird in der Phasenvergleichsschaltung 11, der die beiden ZF-Bildträger zugeführt werden, überprüft. Die Phasenvergleichsschaltung 11 bildet ein Regelsignal, das über den Regelverstärker 12 dem Phasendrehglied 4 zugeführt wird und dieses so nachstimmt, dass die beiden ZF-Bildträger tatsächlich so genau wie möglich um 90° gegeneinander phasenverschoben sind.

Anstelle der Begrenzer 9 und 10 könnten auch andersartige Baugruppen vorhanden sein, mit denen die ZF-Bildträger von den ZF-Signalen abgetrennt werden könnten. Hierfür kämen unter anderem auch Spitzengleichrichter oder sehr schmale Filter in Frage.

Die Frequenz des HF-Oszillators 3 muss exakt in der Mitte zwischen der zu empfangenden Bildträgerfrequenz und der Farbträgerfrequenz liegen. Schon geringfügige Abweichungen machen sich als Moiré störend bemerkbar. Zur exakten Einstellung des ZF-Oszillators 3, die dann erreicht ist, wenn ZF-Bildträger und ZF-Farbträger zueinander synchron sind, ist deshalb eine Phasen- und Frequenzvergleichsschaltung 15 vorgesehen. Dieser wird das im Frequenzteiler 14 in seiner Frequenz halbierte, mit dem im empfangenen Signal enthaltenen Farbträgersignal synchrone Farbhilfsträgersignal und der im Begrenzer 9 gewonnene ZF-Bildträger zugeführt. Es wird dann eine Regelspannung gebildet, die bei gleicher Frequenz der beiden Signale phasenabhängig und bei ungleicher Frequenz verstimmungsabhängig ist. Die Regelspannung wird dem HF-Oszillator 3 zugeführt. Damit wird Synchronismus zwischen ZF-Bildträger und ZF-Farbträger erreicht. Eine Phasen- und Frequenzvergleichsschaltung, die die gewünschten Eigenschaften aufweist, ist beispielsweise aus der deutschen Patentschrift 1 287 689 bekannt.

Die Verstärker 7 und 8 sind regelbar. Aus ihren Ausgangssignalen werden in zwei Regelverstärkern 20 bzw. 21 Regelspannungen gebildet, die den Verstärkern 7 und 8 zur Regelung ihrer Verstärkung zugeführt werden. Die Regelungen sollen so exakt sein, dass die Amplituden der ZF-Signale möglichst genau gleich sind. Fehler <1% sind beispielsweise dadurch erreichbar, dass die Ausgangssignale in den Regelverstärkern 20 bzw. 21 digital verarbeitet werden, indem die Spitzenamplituden mit einem Sollwert verglichen und daraus die Regelspannungen gebildet werden. Eine zusätzliche, in Fig. 1 nicht dargestellte Möglichkeit besteht darin, in einem weiteren Regelverstärker die Spitzenamplituden der beiden Ausgangssignale untereinander zu vergleichen, daraus eine zusätzliche Regelspannung zu bilden und damit einen der beiden Verstärker 7 oder 8 zusätzlich zu beeinflussen.

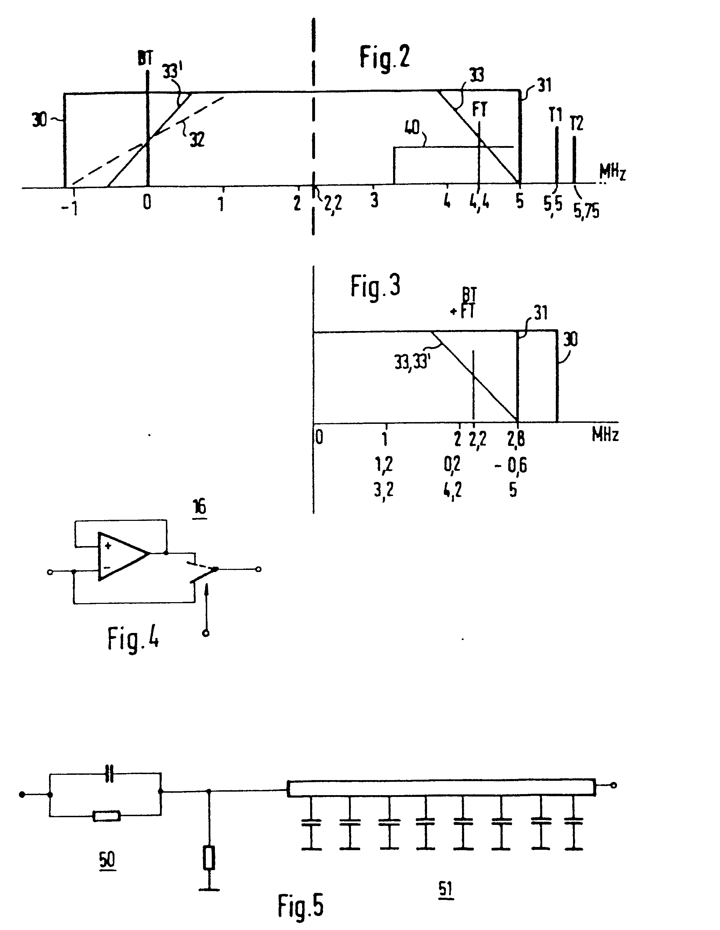

Anhand der Figuren 2 und 3 wird die Wirkungsweise des Fernsehempfangsgerät entsprechend Fig. 1 weiter erläutert. Gleichzeitig werden an einzelne Baugruppen zu stellende Forderungen weiter präzisiert.

Fig. 2 zeigt das Spektrum eines Fernsehsignals. Dabei ist die Frequenzskala normiert, d.h. sie gibt die Frequenzabweichung von der Frequenz des HF-Bildträgers an. Liegt dieser z.B. bei 300 MHz, so liegt der Farbträger bei 304, 4 MHz und der (erste) Tonträger bei 305,5 MHz. Ein weiterer Tonträger kann bei 305,75 MHz liegen. Der Bildträger ist mit BT und der Farbträger mit FT bezeichnet. Zwei Tonträger sind mit T1 und T2 bezeichnet. Das Spektrum ist das eines restseitenbandmodulierten Signals mit einer unteren Bandgrenze 30 und einer oberen Bandgrenze 31. Darin enthalten ist das Farbsignalspektrum 40. Die bei herkömmlichen Überlagerungsempfängern mit hoher Zwischenfrequenz üblichen Selektionsmittel verändern im Zwischenfrequenzbereich durch Bandfilter dieses Spektrum so, dass eine flachere Nyquistflanke 32 im Bereich des Bildträgers und eine steilere Nyquistflanke 33 für das Farbsignal entstehen. Auch das Farbsignal ist restseitenbandmoduliert. Die Erfindung geht u.a. davon aus, dass es ohne weiteres zulässig ist, die flachere Nyquistflanke 32 durch eine steilere Nyquistflanke 33' zu ersetzen, die die gleiche Steilheit wie die steilere Nyquistflanke 33 aufweist.

Da die Frequenz des HF-Oszillators 3 genau in der Mitte zwischen Bildträger BT und Farbträger FT liegt, liegt die Faltungsfrequenz 2,2 MHz der ZF-Signale an den Ausgängen der HF-Mischer 1 und 2 genau bei der Frequenz Null. Es ergibt sich um diese Mittenfrequenz Null eine «Zentralfaltung», derart, dass der ZF-Bildträger und der ZF-Farbträger die gleiche Frequenz haben und phasenstarr mit einander verkoppelt sind. Dies ist in Fig. 3 dargestellt. Die Frequenzachse ist zum einen in der absoluten Frequenz beschriftet, zum anderen sind, in doppelter Belegung die normierten Frequenzen entsprechend Fig. 2 hinzugefügt. Anstelle des exakten Werts für den Frequenzabstand von Bildträger und Farbträger wird ein gerundeter Wert von 4,4 MHz verwendet. Die ZF-Signale an den Ausgängen der HF-Mischer 1 und 2 sind um 90° gegeneinander phasenverschoben. Die beiden Bandgrenzen 30 und 31 liegen im ZF-Bereich bei verschiedenen Frequenzen, die beiden steileren Nyquistflanken 33 und 33' fallen im ZF-Bereich jedoch zusammen. Sie werden durch die Flanken der Tiefpässe 5 und 6 gebildet. Die Tiefpassflanken müssen also so geformt sein, dass sie ZF-Bildträger und ZF-Farbträger auf die Hälfte reduzieren und zu dieser Frequenz bezüglich Form und Steilheit etwa symmetrisch sind. Da normgemäss die Farbspektren mit den Luminanzspektren «verkämmt» sind, (d.h., das kammartige Farbspektrum liegt in den Lücken des kammartigen Luminanzspektrums) sind auch die gefalteten Luminanzspektren verkämmt. Dadurch treten im Luminanzsignal auch dann keine Störungen auf, wenn bei der späteren «Rückfaltung» Reste des gefalteten Signals erhalten bleiben. Die gefalteten Linien des Farbspektrums kommen auf Linien des Luminanzspektrums zu liegen; Reste des Farbspektrums werden deshalb durch das Luminanzspektrum überdeckt und umgekehrt.

Die Phasen- und Frequenzvergleichsschaltung 15 hat die Eigenschaft, bei grösseren Frequenzabweichungen der verglichenen Signale eine «verstimmungsabhängige» Regelspannung zu erzeugen, das ist eine Regelspannung, deren Polarität von der Richtung der Verstimmung abhängig ist. Es ist eine Regelspannung, die auch bei Siebung ihre frequenznachstimmende Wirkung nicht verliert, wie dies bei einer nur durch Phasenvergleich erzeugten Regelspannung der Fall ist. Hat diese Regelspannung die Frequenzabweichung sehr weit reduziert, so ergibt sich eine phasenabhängige Regelspannung, mit der die phasenstarre Synchronisation erzielt wird. Erfindungsgemäss ist dabei die Sollphase so gewählt, dass bei gleicher Frequenz der beiden Signale der ZF-Bildträger phasengleich mit dem (R-Y)-Signal ist (bei PAL) bzw. (bei NTSC), dass der ZF-Bildträger eine Phase aufweist, die um 90° gegenüber derjenigen Phase verdreht ist, die einer Farbe entspricht, bei der eine geringfügige Verfälschung subjektiv am wenigsten wahrnehmbar ist. Bei einer Abweichung des ZF-Bildträgers von seiner Sollphase, ergibt sich dann bei der Farbe, die der Sollphase entspricht, ein Fehler in der Farbsättigung, bei einer dagegen um 90° verdrehten Phase ergibt sich ein Farbfehler. Für den Fall, dass eines der beiden 90°-Phasendrehglieder 4 und 17 nicht genau um 90° dreht, oder dass die Verstärkung der beiden Zweige etwas unterschiedlich ist, ist bei PAL und ungefährer Einhaltung der Phasenbedingung (ZF-Bildträger-Phase = (R-Y)-Phase) infolge der PAL-Alternierung auch der restliche Farbfehler völlig beseitigt. Bei NTSC bleibt der Fehler auf ein Minimum beschränkt. Die Sollphase ist beispielsweise dadurch beeinflussbar, dass am Eingang der Phasen- und Frequenzvergleichsschaltung 15 ein einstellbares Phasendrehglied vorgesehen ist.

Mit den Synchrondemodulatoren 16 und 18 werden die beiden ZF-Signale mit zwei um 90° zueinander verdrehten Spannungen der halben Farbhilfsträgerfrequenz gemischt und damit demoduliert. Dabei erfolgt diese Mischung hier einfach durch Umpolung der ZF-Signale mit der halben Farbhilfsträgerfrequenz. Diese umpolende Mischung kann analog erfolgen oder, wenn die ZF-Signale digitalisiert wurden, im digitalen durch Invertierung des Vorzeichenbits mit halber Farbhilfsträgerfrequenz als Schaltfrequenz.

Fig.4 zeigt eine Möglichkeit zur Realisierung eines Synchrondemodulators. Ein Operationsverstärker ist als Inverter geschaltet, ein Schalter schaltet mit der halben Farbhilfsträgerfrequenz zwischen dem Ausgangssignal und dem Eingangssignal des Inverters um.

Hinter jedem der beiden Synchrondemodulatoren 16 und 18 erscheint das komplette Videosignal jeweils in Normallage und in Kehrlage. Durch die Addierstufe 19 werden die beiden in Normallage liegenden Videosignale verstärkt, die beiden in Kehrlage liegenden Videosignale werden unterdrückt. Je nach der Richtung der Phasendrehung in den beiden Phasendrehgliedern 4 und 17 kann anstelle der Addierstufe 19 auch eine Subtrahierstufe erforderlich sein, um das Signal in Normallage zu erhalten.

Das so gewonnene Videosignal durchläuft den Videotiefpass 22, dessen Bandbreite so bemessen ist, dass Frequenzen oberhalb des Videobandes unterdrückt werden, so vor allem die vierfache Frequenz des ZF-Bildträgers (im vorliegenden Beispiel 4×2,2 MHz = 8,8 MHz), die durch die Synchrondemodulation und Addition entsteht, denn die Synchrondemodulation, die einer Doppelweggleichrichtung entspricht, verändert einen 2,2 MHz-Sinus in eine 4,4 MHz-Halbwellenspannung. Addiert man zwei um 90° verschobene 4,4 MHz-Halbwellenspannungen, so erhält man ausser dem Gleichspannungsanteil eine 8,8 MHz-Halbwellenspannung geringer Welligkeit. Das gewonnene Video- oder FBAS-Signal wird in an sich bekannter Weise weiterverarbeitet. So kann das Farbsignal mittels Kammfilter vom Bildsignal getrennt werden. Anschliessend wird es mit der Farbhilfsträgerfrequenz nach zwei Achsen quadraturdemoduliert, nämlich nach (R-Y) und (B-Y) bei PAL bzw. nach I und Q bei NTSC. Auch das 5,5 MHz-Tonsignal kann in an sich bekannter Weise vom Videosignal abgetrennt werden. Auch der zur Synchronisation des Farbhilfsträgeroszillators 13 erforderliche Burst wird aus dem Videosignal durch ein Filter 23 ausgesiebt und dem Farbhilfsträgeroszillator 13 zugeführt.

Die wesentlichen Vorteile des Erfindungsgegenstandes sind:

Eine Tiefpassflanke bewirkt die Nyquistflanke für den Bildträger und den Farbträger und die Nachbarkanalselektion nach beiden Seiten im HF-Spektrum.

Ein weiterer Vorteil ist die Synchronisation des HF-Oszillators mit einem Regelkreis. Durch diesen wird nicht nur das Moiré beseitigt, das sich ergibt, wenn im ZF-Bereich Farbträger und Bildträger nicht exakt zusammenfallen, sondern es wird auch, wenn der Regelkreis schnell reagiert, durch Netzbrumm verursachte Brumm-Modulation vermieden, sowie «Mikrophoniestörungen» des Oszillators. Man versteht darunter durch mechanische Erschütterungen (die z.B. vom Lautsprecher kommen) ausgelöste Frequenzmodulation des Oszillators, die sich als Streifen im Bild auswirkt.

Besonders vorteilhaft ist das erfindungsgemässe Empfängerkonzept für die Integration geeignet, weil praktisch keine Abgleichpunkte vorkommen und die Tiefpassfilterung keinen Abgleich benötigt.

Synchrondemodulatoren sind leicht sowohl in Analogtechnik wie auch in Digitaltechnik realisierbar, wenn die Frequenz nicht zu hoch ist. Da die höchste ZF etwa 2,8 MHz beträgt, gibt es diesbezüglich keine Probleme.

Auch die Schaltungen zur Erzeugung der Nachstimmspannungen für die Synchronisation des HF-Oszillators und zur frequenzabhängigen Nachstimmung des 90°-Phasendrehglieds für die HF-Oszillatorspannung sind in digitaler, wie auch analoger Form leicht integrierbar.

Sogar die Tiefpässe sind trotz der geforderten hohen Nachbarkanalselektion z.B. auf folgende Weise integrierbar: Integriert man einen ohmschen Widerstand so, dass er relativ viel Kapazität zu Masse hat, so kann man bei entsprechend langgestreckter Form erreichen, dass sich eine «RC-Leitung», d.h. derselbe Fall ergibt, der in der «Leitungstheorie» für niedrige Frequenzen bekannt ist, nämlich eine Leitung mit differentiell verteiltem Widerstand, verkoppelt mit differentiell verteilter Kapazität nach Masse. Ein solches RC-Filtersystem hat eine recht hohe Flankensteilheit bei höheren Dämpfungswerten. Es hat allerdings eine deutlich zu geringe Steilheit bei geringen Dämpfungen, also z.B. bei einer Absenkung 1:2, dort, wo hier die Nyquistflanke sein soll. Dieser Nachteil ist aber mit einem entsprechenden gegenwirkenden RC-Glied gut ausgleichbar.

Fig. 5 zeigt die Kombination eines solchen Ausgleichs-RC-Glieds 50, das im Längszweig aus einem Kondensator mit parallel geschaltetem Widerstand und im anschliessenden Querzweig aus einem Widerstand besteht, und der RC-«Leitung» 51, die vom Integrationsaufwand her nicht viel aufwendiger als ein Widerstand und ein Kondensator ist, aber eine Nachbarkanalselektion von ca. 40 db/Oktave hat, was man mit aktiven Filtern nur mit 7 RC-Gliedern erreicht.

Bezugszeichenliste

| | |
|---|---|
| 1, 2 | HF-Mischer |
| 3 | HF-Oszillator |
| 4 | 90°-Phasendrehglied |
| 5, 6 | Tiefpässe |
| 7, 8 | Verstärker |
| 9, 10 | Begrenzer |
| 11 | Phasenvergleichsschaltung |
| 12 | Regelverstärker |
| 13 | Farbhilfsträgeroszillator |
| 14 | Frequenzteiler |
| 15 | Phasen- und Frequenzvergleichsschaltung |
| 16 | Synchrondemodulator |
| 17 | 90°-Phasendrehglied |
| 18 | Synchrondemodulator |
| 19 | Addierstufe |
| 20, 21 | Regelverstärker |
| 22 | Videotiefpass |
| 23 | Filter |
| 30 | untere Bandgrenze |
| 31 | obere Bandgrenze |
| 32 | flachere Nyquistflanke |
| 33, 33' | steilere Nyquistflanken |
| 40 | Farbsignalspektrum |
| 50 | RC-Glied |
| 51 | RC-«Leitung» |
| BT | Bildträger |
| FT | Farbträger |
| T1, T2 | Tonträger |

## Patentansprüche

1. Überlagerungsempfänger zum Empfang eines amplitudenmodulierten HF-Signals,
- bei dem ein einstellbarer HF-Oszillator (3) vorhanden ist, der zwei Ausgangssignale abgibt, deren Frequenz in der Mitte des Spektrums des HF-Signals liegt und die gegeneinander um 90° phasenverschoben sind,
- bei dem zwei HF-Mischer (1, 2) vorhanden sind, von denen einer das HF-Signal mit einem Ausgangssignal des HF-Oszillators und der andere das HF-Signal mit dem anderen, um 90° phasenverschobenen Ausgangssignal des HF-Oszillators mischt,

– bei dem zwei gleichartige Tiefpässe (5, 6) vorhanden sind, deren Grenzfrequenz etwa bei der halben Bandbreite des HF-Signals liegt und denen die Ausgangssignale der HF-Mischer zugeführt werden, wobei die Dämpfung im Sperrbereich so bemessen ist, dass die Nachbarkanäle des HF-Signals normgemäss weit abgesenkt sind,

– bei dem zwei Doppelweggleichrichter oder Synchrongleichrichter (16, 18) vorhanden sind, in denen die gegebenenfalls verstärkten Ausgangssignale der Tiefpässe demoduliert werden und

– bei dem ein Addierer oder Subtrahierer (19) vorhanden ist, der die Ausgangssignale der Doppelweggleichrichter oder Synchrongleichrichter addiert bzw. subtrahiert, dadurch gekennzeichnet,

– dass der HF-Oszillator (3) so einstellbar ist, dass die Frequenz seiner Ausgangssignale beim Empfang eines restseitenbandmodulierten Fernsehsignals mit einem Bildträger (BT) und einem Farbträger (FT) absolut genau in der Mitte zwischen der Frequenz des Bildträgers (BT) und der des Farbträgers (FT) liegt und dass sich an den Ausgängen der HF-Mischer (1, 2) ZF-Signale ergeben, bei denen jeweils ZF-Bildträger und ZF-Farbträger frequenzmässig exakt zusammenfallen und eine feste vorgegebene Phasenbeziehung zueinander aufweisen, und

– dass die Flanken der beiden Tiefpässe (5, 6) so bemessen sind, dass sie gleichzeitig als Nyquistflanken für den ZF-Bild- und den ZF-Farbträger dienen.

2. Überlagerungsempfänger nach Anspruch 1, dadurch gekennzeichnet,

– dass ein Frequenzteiler (14) mit dem Teilerverhältnis 1:2 vorhanden ist, der die Ausgangsfrequenz eines Farbhilfsträgeroszillators (13) halbiert,

– dass eine Phasen- und Frequenzvergleichsschaltung (15) vorhanden ist, in der das Ausgangssignal des Frequenzteilers (14) mit einem ZF-Bildträger verglichen wird und in der eine Regelspannung gebildet wird, die bei gleicher Frequenz der beiden Signale phasenabhängig und bei ungleicher Frequenz verstimmungsabhängig ist und

– dass die in der Phasen- und Frequenzvergleichsschaltung (15) gebildete Regelspannung dem HF-Oszillator (3) zur exakten Abstimmung der Frequenz zugeführt wird.

3. Überlagerunsempfänger nach Anspruch 2, bei dem das Fernsehsignal ein PAL-Signal ist, dadurch gekennzeichnet, dass die Phasen- und Frequenzvergleichsschaltung (15) so ausgebildet ist, dass bei gleicher Frequenz der beiden Signale der ZF-Bildträger phasengleich mit dem (R-Y)-Signal ist.

4. Überlagerungsempfänger nach Anspruch 2, bei dem das Fernsehsignal ein NTSC-Signal ist, dadurch gekennzeichnet, dass die Phasen- und Frequenzvergleichsschaltung (15) so ausgebildet ist, dass bei gleicher Frequenz der beiden Signale der ZF-Bildträger eine Phase aufweist, die um 90° gegenüber derjenigen Phase verdreht ist, die einer Farbe entspricht, bei der eine geringfügige Verfälschung subjektiv am wenigsten wahrnehmbar ist.

5. Überlagerungsempfänger nach einem der Ansprüche 2 bis 4, dadurch gekennzeichnet,

– dass ein Phasenvergleicher (11) vorhanden ist, der die Phasen der beiden (frequenzgleichen) ZF-Bildträger vergleicht und eine Regelspannung erzeugt, die abhängig von Grösse und Richtung einer Abweichung vom geforderten Phasenunterschied von 90° ist,

– dass im HF-Oszillator (3) ein Phasendrehglied (4) für 90° Phasendrehung vorhanden ist, das durch die im Phasenvergleicher (11) erzeugte Regelspannung zur weitgehenden Reduzierung dieser Abweichung abstimmbar ist.

6. Überlagerungsempfänger nach einem der Ansprüche 1 bis 5, dadurch gekennzeichnet,

– dass die Demodulatorstufe für Synchrondemodulation ausgebildet ist,

– dass hierzu ein Frequenzteiler (14) mit dem Teilerverhältnis 1:2 vorhanden ist, der die Ausgangsfrequenz eines Farbhilfsträgeroszillators (13) halbiert,

– dass (als Bestandteil des Frequenzteilers (14) oder von diesem getrennt) ein 90°-Phasendrehglied (17) vorhanden ist, das das Ausgangssignal des Frequenzteilers (14) um 90° in der Phase dreht und

– dass zwei Synchrondemodulatoren (16, 18) vorhanden sind, die die, gegebenenfalls verstärkten, Ausgangssignale der Tiefpässe (5, 6) einerseits mit dem Ausgangssignal des Frequenzteilers (14) und andererseits mit dem des 90°-Phasendrehglieds (17) mischen und so als Synchrongleichrichter wirken.

7. Überlagerungsempfänger nach einem der Ansprüche 2 bis 6, dadurch gekennzeichnet, dass zur Gewinnung eines ZF-Bildträgers ein Begrenzer (9, 10) vorhanden ist.

**Claims**

1. Superheterodyne receiver for receiving an amplitude-modulated RF signal comprising

– an adjustable RF oscillator (3) providing two output signals whose frequency lies in the middle of the spectrum of the RF signal and which differ in phase by 90°,

– two RF mixers (1, 2) one of which mixes the RF signal with one of the output signals of the RF oscillator, while the other mixes the RF signal with the other output signal of the RF oscillator, which has been shifted in phase by 90°,

– two low-pass filters (5, 6) of like design whose cutoff frequencies are located at about half the bandwidth of the RF signal and which are fed with the signals from the RF mixers, the attenuation in the stop bands being chosen so that the adjacent channels of the RF signal are attenuated in accordance with the standard,

– two full-wave rectifiers or synchronous rectifiers (16, 18) in which the signals from the low-pass filters, after being amplified if necessary, are demodulated, and

– an adder or a substracter (19) which adds the output signals of the full-wave rectifiers or synchronous rectifiers or subtracts one from the other, respectively, characterized in

– that the RF oscillator (3) can be so adjusted that, when a vestigial-sideband-modulated television signal with a picture carrier (BT) and a chrominance subcarrier (FT) is being received, the frequency of its output signals is located precisely in the middle between the frequency of the picture carrier (BT) and that of the chrominance subcarrier (FT), and that the outputs of the RF mixers (1, 2) provide IF signals in which the picture IF carrier and the chrominance IF subcarrier coincide in frequency and have a predetermined fixed phase relationship to each other, and

– that the slopes of the two low-pass filters (5, 6) are chosen so as to simultaneously serve as Nyquist slopes for the picture IF carrier and the chrominance IF subcarrier.

2. A superheterodyne receiver as claimed in claim 1, characterized in

– that it contains a divide-by-two frequency divider (14) which halves the output frequency of a chrominance-subcarrier oscillator (13),

– that it contains a phase and frequency comparator (15) which compares the signal from the frequency divider (14) with a picture IF carrier and forms a control voltage which is phase-dependent if the two signals are equal in frequency, and detuning-dependent if they differ in frequency, and

– that the control voltage formed in the phase and frequency comparator (15) is applied to the RF oscillator (3) for accurate tuning.

3. A superheterodyne receiver as claimed in claim 2 wherein the television signal is a PAL signal, characterized in that the phase and frequency comparator (15) is so designed that, when the two signals are equal in frequency, the picture IF carrier is in phase with the R-Y signal.

4. A superheterodyne receiver as claimed in claim 2 wherein the television signal is an NTSC signal, characterized in that the phase and frequency comparator (15) is so designed that, when the two signals are equal in frequency, the phase of the picture IF carrier differs by 90° from the phase corresponding to a color at which, subjectively, a slight error is perceptible least.

5. A superheterodyne receiver as claimed in any one of claims 2 to 4, characterized in

– that it contains a phase comparator (11) which compares the phases of the two (equal-frequency) picture IF carriers and produces a control voltage which is dependent on the magnitude and direction of a deviation from the required phase difference of 90°, and

– that the RF oscillator (3) contains a 90° phase shifter (4) which is so adjustable by means of the control voltage produced in the phase comparator (11) as to largely reduce said deviation.

6. A superheterodyne receiver as claimed in any one of claims 1 to 5, characterized in

– that the demodulator stage is designed for synchronous demodulation,

– that for this purpose, a divide-by-two frequency divider (14) is provided which halves the output frequency of a chrominance-subcarrier oscillator (13),

– that (as part of or separate from the frequency divider (14)) a 90° phase shifter (17) is provided which shifts the phase of the output signal of the frequency divider (14) by 90°, and

– that two synchronous demodulators (16, 18) are provided one of which (16) mixes the signal from one of the low-pass filters (5), which is amplified if necessary, with the signal from the frequency divider (14), while the other (18) mixes the signal from the other low-pass filter (6), which is amplified if necessary, with that from the 90° phase shifter (17), the two synchronous demodulators thus acting as synchronous rectifiers.

7. A superheterodyne receiver as claimed in any one of claims 2 to 6, characterized in that a limiter (9, 10) is provided for deriving a picture IF carrier.

**Revendications**

1. Récepteur superhétérodyne pour recevoir un signal HF modulé en amplitude comprenant:

– un oscillateur HF réglable (3) produisant deux signaux de sortie dont la fréquence se situe dans le spectre du signal HF et dont les phases diffèrent l'une de l'autre de 90°,

– deux mélangeurs HF (1, 2) dont l'un mélange le signal HF avec l'un des signaux de sortie de l'oscillateur HF et l'autre mélange le signal HF avec l'autre signal de sortie de l'oscillateur HF, qui est déphasé de 90°,

– deux filtres passe-bas semblables (5, 6) dont les fréquences de coupure sont situées à environ la moitié de la largeur de bande du signal HF et auxquels sont appliqués les signaux de sortie des mélangeurs HF, l'atténuation dans la zone de coupure étant telle que les canaux adjacents du signal HF sont atténués conformément aux normes,

– deux redresseurs double- alternances ou deux redresseurs synchrones (16, 18) dans lesquels sont démodulés les signaux de sortie des filtres passe-bas, après avoir été amplifiés, si nécessaire,

– un additionneur ou un soustracteur (19) qui additionne ou soustrait les signaux de sortie des redresseurs double-alternances ou synchrone, caractérisé en ce que

– l'oscillateur HF (3) peut être réglé de façon que, à la réception d'un signal de télévision à modulation à bande latérale résiduelle avec une onde porteuse image (BT) et une sous-porteuse son (FT), la fréquence de son signal de sortie soit située précisément à mi-distance entre la fréquence de l'onde proteuse image (BT) et celle de la sous-porteuse son (FT), les sorties des mélangeurs HF (1, 2) fournissant des signaux FI dans lesquels l'onde porteuse image FI et la sous-porteuse son FI coincident en fréquence et ont entre elles une relation de phase fixe et prédéterminée,

– les pentes des deux filtres passe-bas (5, 6) sont telles qu'elles constituent des pentes de Nyquist en même temps pour l'onde porteuse image FI et la sous-porteuse son FI.

2. Récepteur superhétérodyne selon la revendication 1, caractérisé en ce que:

– il comprend un diviseur de fréquence par deux (14), qui divise par deux la fréquence de sortie d'un oscillateur de sous-porteuse de chrominance (13),

– il comprend un comparateur de phase et de fréquence (15) qui compare le signal de sortie du diviseur de fréquence (14) avec une onde porteuse image FI pour former une tension de commande qui dépend de la phase entre les signaux s'ils sont de même fréquence et de leur écart en fréquence s'ils ont des fréquence différentes, et

– la tension de commande formée par le comparateur de fréquence et de phase (15) est appliquée à l'oscillateur HF (3) pour le réglage fin de l'accord.

3. Récepteur superhétérodyne conforme à la revendication 2 caractérisé en ce que, lorsque le signal de télévision est un signal PAL, le comparateur de phase et de fréquence (15) est conçu de sorte que, lorsque les deux signaux ont la même fréquence, l'onde porteuse image FI soit en phase avec le signal R.Y.

4. Récepteur superhétérodyne selon la revendication 2, caractérisé en ce que, lorsque le signal de télévision est un signal NTSC, le comparateur de phase et de fréquence (15) est conçu de sorte que, lorsque les deux signaux ont la même fréquence, la phase de l'onde porteuse image FI diffère de 90° de la phase correspondant à une couleur pour laquelle, subjectivement, une petite erreur est la moins perceptible.

5. Récepteur superhétérodyne selon l'une des revendications 2 à 4, caractérisé en ce que:

– il comprend un comparateur de phase (11) qui compare les phases des deux ondes porteuses image FI (de même fréquence) et produit une tension de commande dépendant de la grandeur et du sens de toute déviation par rapport à la différence de phase requise de 90°, et

– l'oscillateur HF (3) comprend un déphaseur à 90° (4) qui est réglable au moyen de la tension de commande produite par le comparateur de phase (11) de façon à réduire fortement cette déviation.

6. Récepteur superhétérodyne selon l'une quelconque des revendications 1 à 5, caractérisé en ce que:

– l'étage démodulateur est prévu pour une démodulation synchrone,

– à cette fin, un diviseur de fréquence par deux (14) divise par deux la fréquence de sortie d'un oscillateur de sous-porteuse de chrominance (13),

– un déphaseur à 90° (17), faisant partie ou séparé du diviseur de fréquence (14), décale la phase du signal de sortie du diviseur de fréquence (14) de 90°, et

– deux démodulateurs synchrones (16, 18) sont prévus, dont l'un (16) mélange le signal de sortie de l'un des filtres passe-bas (5), amplifié si nécessaire, avec le signal de sortie du diviseur de fréquence (14), tandis que l'autre (18) mélange le signal de sortie de l'autre filtre passe-bas (6), amplifié si nécessaire, avec celui du déphaseur à 90° (17), les deux démodulateurs synchrones fonctionnant ainsi en redresseurs synchrones.

7. Récepteur superhétérodyne selon l'une quelconque des revendications 2 à 6, caractérisé en ce qu'un limiteur (9, 10) est prévu pour fournir une porteuse image FI.

Fig.1

## Fig.2

BT
33'
33
31
30
32
FT
40
T1 T2
MHz
-1   0   1   2  2,2  3   4  4,4  5  5,5
                                    5,75

## Fig.3

BT
+FT
31
30
33,33'
MHz
0   1      2  2,2  2,8
    1,2      0,2  -0,6
    3,2      4,2   5

16

## Fig.4

## Fig.5

50

51